# EUROPÄISCHE PATENTANMELDUNG

(11) **EP 0 769 250 A1**
(43) Veröffentlichungstag der Anmeldung: **23.04.1997**
(21) Anmeldenummer: 96115887.0
(22) Anmeldetag: 04.10.1996
(51) Int. Cl.: A23C 9/156, A23C 21/08, A23C 9/13, A23C 11/10

(54) **Lebensmittel auf Milchbasis und seine Verwendung**

(30) Priorität: 04.10.1995 DE 19536900
(71) Anmelder: SCHMIDT, Karlheinz, D-72810 Gomaringen (DE); Eitel, Vida, 36041 Fulda (DE)
(72) Erfinder: SCHMIDT, Karlheinz, D-72810 Gomaringen (DE); Eitel, Vida, 36041 Fulda (DE)
(74) Vertreter: Patentanwälte Bartels und Partner

(57) **Zusammenfassung**

Die Erfindung betrifft ein Lebensmittel auf Milchbasis mit einem Zusatz in Form von einer oder mehreren natürlichen oder künstlichen pflanzlichen Drogen, ausgenommen Vanillin in Form eines wäßrigen und/oder öligen und/oder alkoholischen Auszuges aus einem oder mehreren beliebigen Heilkräutern und/oder in Form des jeweiligen ätherischen Öls, wobei der Zusatz in dem fertigen Lebensmittel in einer Konzentration von 0,01 bis 15 Gew%, vorzugsweise 0,01 bis 10 Gew% enthalten ist.

Das erfindungsgemäße Lebensmittel ist vorzugsweise ein Milchmischgetränk, besonders bevorzugt aus ultrahocherhitzter Milch.

Besonders vorteilhaft ist, daß der an sich unangenehme Beigeschmack der ultrahocherhitzten Milch durch den Zusatz überdeckt und gleichzeitig durch Verwendung des Heilkräuterzusatzes ein wertvolleres Lebensmittel geschaffen werden kann.

## Beschreibung

Die Erfindung betrifft ein Lebensmittel auf Milchbasis und seine Verwendung.

Üblicherweise wird unter einem Lebensmittel synonym zu dem Begriff Nahrungsmittel etwas verstanden, was gegessen oder getrunken wird und der Ernährung dient (Wahrig, "Deutsches Wörterbuch", Bertelsmann Lexikon Verlag, 1991, Seite 822, rechte Spalte, Seite 922, mittlere Spalte). Im Rahmen der vorliegenden Erfindung wird der Begriff Lebensmittel erweitert so verstanden, daß er Mittel umfaßt, die nicht nur zur Nahrung, sondern zusätzlich zur Erfrischung, zum Aufbau und zu Heilzwecken dienen.
Der Begriff "auf Milchbasis", wie er hier verwendet wird, umfaßt neben der Milch selbst auch deren Folgeprodukte, wie beispielsweise Yoghurt, und Abfallprodukte, die bei der Weiterverarbeitung der Milch anfallen, wie Molke.
Der Begriff umfaßt zusätzlich Sojamilch.
Ein bekanntes Lebensmittel auf Milchbasis mit einem Zusatz ist das Milchmischgetränk Kakao. Seit einiger Zeit sind aber auch solche Milchmischgetränke erhältlich, die einen Zusatz in Form von natürlicher oder künstlicher Vanille aufweisen. Auch Milchmischgetränke mit Zusätzen in Form von Erdbeergeschmacksstoffen oder ähnlichem sind erhältlich.

Das Kakaomilchmischgetränk hat den Nachteil, daß mit der verwendeten Kakaobohne Theobromin zugeführt wird, das leicht erregend auf Herz und Nervensystem sowie diuretisch wirkt. In der zunehmend gesundheitsbewußter werdenden Bevölkerung stößt daher das Kakaogetränk in manchen Kreisen, insbesondere bei der Verwendung als Kindergetränk, auf zunehmende Skepsis. Bei den weiteren bekannten Milchmischgetränken dienen die Zusatzstoffe lediglich als Geschmacksstoffe, ohne selbst aktiv auf Aufbau-, Heilungs-oder Erholungsprozesse im Organismus einzuwirken.

Der Erfindung liegt daher die Aufgabe zugrunde, ein Lebensmittel auf Milchbasis bereitzustellen, das in der Lage ist, die gesundheitsfördernden Eigenschaften der Milch oder ihrer Folgeprodukte zu unterstützen und zu verstärken.

Die Aufgabe wird gelöst durch die Kombination der Merkmale des Anspruchs 1.

Dadurch, daß dem Lebensmittel ein Zusatz in Form von einer oder mehreren natürlichen pflanzlichen Drogen in Form eines Heikräuterauszuges, eines etherischen Öls oder künstlichen pflanzlichen Drogen, ausgenommen Vanillin, beigegeben wird, verstärkt sich die aufbauende Wirkung der Milch oder ihrer Folgeprodukte durch das jeweilige Wirkungsspektrum der hinzugefügten Droge(n). Entsprechend der Vielfalt der zusetzbaren pflanzlichen Drogen sind auch die positiven Wirkungen, um die das jeweilige Lebensmittel bereichert werden kann.

Der Begriff Heilkräuterauszug umfaßt dabei Auszüge aus allen Pflanzenteilen, einschließlich Wurzeln, Blüten und Früchte.
Unter die künstlichen pflanzlichen Drogen sind beispielsweise naturidentische pflanzliche Drogen einzuordnen. Die künstlichen Drogen können entweder ganz oder unter Verwendung eines in der Natur vorkommenden Ausgangs- oder Zwischenproduktes synthetisch hergestellt werden. Bei den natürlichen pflanzlichen Drogen ist ein wäßriger und/oder öliger und/oder alkoholischer Heilkräuterauszug und/oder ein etherisches Öl zugesetzt. Der jeweilige Auszug ist aus einem oder mehreren beliebigen Heilkräutern hergestellt. Dabei können auch Mischungen von z.B. einem wäßrigen Heilkräuterauszug mit einem etherischen Öl verwendet werden. Diese Heilkräuter können z.B. Kamille, Salbei, Rosmarin, Pfefferminze und/oder Melisse sein, wobei diese Aufzählung lediglich beispielhaften Charakter hat.

Erfindungsgemäß ist der Zusatz in dem fertigen Lebensmittel in einer Konzentration von in etwa 0,01 bis in etwa 15 Gew%, vorzugsweise 0,01 - 10 Gew% enthalten. Dadurch ist es möglich, in wirtschaftlich günstiger Weise erfindungsgemäße Lebensmittel herzustellen. Überraschenderweise wurde dabei festgestellt, daß diese Konzentrationen ausreichend sind, um den Eigengeschmack der Milch zu überdecken, indem das Lebensmittel des Geschmack des Zusatzes mehr oder weniger vollständig annimmt.

Der Zusatz kann Konzentrationen von 5 - 15 Gew% des wäßrigen Auszuges in Form eines Extraktes und/oder 0,05 - 0,15 Gew% des wäßrigen Auszuges in Form einer Paste und/oder 4 - 8 Gew% des öligen Auszuges und/oder 1 - 5 Gew% des alkoholischen Auszuges und/oder 0,01 - 0,1 Gew% des etherischen Öls, jeweils bezogen auf das Lebensmittel, enthalten, wobei die weiter oben angegebenen Konzentrationsgrenzen des fertigen Lebensmittels nicht überschritten werden, wenn Mischungen der verschiedenen Formen von Heilkräuterauszügen oder etherischen Ölen verwendet werden. Außerdem kann anstelle des wäßrigen Extraktes oder der durch Eindicken daraus hervorgehenden Paste auch ein Pulver verwendet werden. Dieses Pulver kann neben dem Heilkrautbestandteil einen üblichen Trägerstoff aufweisen.
Außerdem kann das fertige Lebensmittel in etwa 5 bis 15 Gew%, vorzugsweise 4 - 10 Gew% eines oder mehrerer natürlicher Zucker, einschließlich Honig, oder aber Zuckeraustauschstoffe enthalten. Als natürliche Zucker kommen dabei Monosaccharide, d.h. einfache Zucker, wie z.B. Glukose, Dextrose, genauso in Frage wie Oligosaccharide, wie beispielsweise die Saccharose. Aber auch alternative Süßungsmittel, wie z.B. Ahornsirup, um eines beispielhaft zu nennen, können dem erfindungsgemäßen Lebensmittel zugesetzt werden.

In einer erfindungsgemäßen Ausführungsform ist das Lebensmittel ein Milchmischgetränk. Die Milch, die als Grundlage für das Milchmischgetränk dient, kann Kuhmilch mit einem Fettanteil von in etwa 1 bis 5% sein. Es kann aber auch eine Sahnezubereitung Verwendung finden. Besonders bevorzugt ist diese Milch eine ultrahocherhitzte Milch. Dabei kommen die Vorteile der erfindungsgemäß verwendeten Konzentrationen besonders deutlich zur Geltung, da von ultrahocherhitzter Milch, der sogenannten H-Milch, bislang bekannt war, daß sie über einen unangenehmen Beigeschmack, den sogenannten Kochgeschmack, verfügt. Dieser unangenehme Beigeschmack kann erfindungsgemäß durch den Zusatz überdeckt werden und gleichzeitig durch Verwendung des Heilkrautes oder der jeweiligen Heilkräuter ein wertvolleres Lebensmittel geschaffen werden. Besonders überraschend und nicht zu erwarten war die Tatsache, daß der positive Effekt des Überdeckens der geschmacklichen Eigenart der H-Milch mit den angegebenen geringen und daher wirtschaftlich günstigen Konzentrationen an zugegebenem Heilkraut möglich war. Ein solchermaßen hergestelltes Lebensmittel hat des weiteren den Vorteil einer verlängerten Haltbarkeit, was teilweise den erfindungsgemäßen Einsatz des Lebensmittels erst ermöglicht. Dies ist z.B. der Fall, wenn das Lebensmittel bei sportlichen Veranstaltungen, Wanderungen oder dergleichen bei warmen bis heißen Klimabedingungen als Erfrischungs- und/oder Regenerationsmittel eingesetzt werden soll. Das erfindungsgemäße ultrahocherhitzte Milchmischgetränk kann bei Temperaturen von ca. 25°C mindestens 3 Monate lang gelagert werden.

Aber auch bei der Lagerung des erfindungsgemäßen Milchmischgetränks in einem Warenhaus ergeben sich Vorteile, da auch hier die Standzeit gegenüber nicht aus H-Milch hergestellten beliebigen Milchprodukten erheblich verlängert ist unter gleichzeitiger problemloser Lagerung auch außerhalb des Kühlregals. Unter günstigen Bedingungen sind Lagerzeiten von bis zu 6 Monaten möglich.

Sojamilch kann auch als Grundlage für das Getränk dienen.

In einer weiteren erfindungsgemäßen Ausführungsform ist das Lebensmittel ein Molkengetränk.

Das erfindungsgemäße Lebensmittel kann auch auf einem Milchfolgeprodukt basieren, wobei diese Milchfolgeprodukte Buttermilch, Dickmilch, Kefir, Yoghurt oder dergleichen sein können. Der Yoghurt kann auch ein thermisierter Yoghurt oder Trinkyoghurt sein.

Je nach Verwendungszweck kann der Fettanteil des eingesetzten Milchfolgeproduktes bei in etwa 1 bis in etwa 5% liegen. Es kann auch eine Sahnezubereitung Verwendung finden.

Die Erfindung betrifft auch bevorzugte Verwendungen des erfindungsgemäßen Lebensmittels.

Bedingt durch den erfindungsgemäßen Zusatz von natürlichen pflanzlichen Drogen in Form von Heilkräuterauszügen oder künstlichen pflanzlichen Drogen ist es sogar möglich, das Lebensmittel zur Erfrischung einzusetzen, was als solches bisher nicht bekannt ist. Damit können die erfrischenden Eigenschaften des entsprechenden Heilkräuterauszuges oder der entsprechenden Droge in günstiger Weise in Wechselwirkung treten mit der Funktion der Milch oder ihrer Folgeprodukte als Nahrungsmittel.

Ebenso kann das Lebensmittel zum Aufbau verwendet werden, insbesondere als Energiespender und/oder zur Regeneration bei und nach körperlichen und/oder seelischen Belastungen oder zur Rekonvaleszenz bei und nach Krankheiten. Dabei ist der Zusatz spezieller, den Erholungsprozeß oder sogar den Gesundungsprozeß fördernder Heilkräuter, die der Fachmann kennt, ganz besonders geeignet, die gesundheitsfördernden Eigenschaften der Milch und ihrer Folgeprodukte zu unterstützen.

Im folgenden wird die Erfindung anhand von Ausführungsbeispielen näher erläutert.

Diese Beispiele haben jedoch nur exemplarischen Charakter, sowohl in Hinblick auf den Verwendungszweck, die verwendeten Heilkräuter, Zucker, als auch auf die Konzentrationsangaben. Auch ist in der Regel möglich, eine beispielsweise als Buttermilchmischgetränk angegebene Verwendung stattdessen als Milchmischgetränk zu verwenden oder eine Yoghurt- oder sonstige Zubereitung herzustellen.

### I. Milchmischgetränk

Erfindungsgemäße Milchmischgetränke sind in Tabelle 1 angegeben. Die für das Milchmischgetränk verwendete Milch wird als Mager- oder Vollmilch bzw. als Milch mit natürlichem Fettgehalt verwendet. Es kann aber auch Rohmilch verwendet werden, wobei dann der Fettgehalt entsprechend höher liegt. Ähnliche Mischgetränke werden auch unter Verwendung von Sojamilch hergestellt.

Wenn eine natürliche pflanzliche Droge verwendet wird, gewinnt man sie durch Herstellung eines wäßrigen Heilkräuterauszuges in an sich bekannter Weise. Dabei ist zu beachten, daß die Heilkräuterauszüge teilweise dadurch gewonnen werden, daß man sie kalt ansetzt und zusammen mit dem Wasser erhitzt, und teilweise dadurch, daß die auszuziehende Droge dem siedenden Wasser zugegeben wird. Das wurde in den Tabellen durch jeweils den Zusatz kalt oder heiß angedeutet. Im Fall des Milchmischgetränkes zur Unterstützung bei grippalen Infekten finden sich Heilkräuter beider Herstellungsvarianten. Hier hat es sich als vorteilhaft erwiesen, zunächst die pflanzliche Droge kalt anzusetzen, die dies erfordert und dann nach dem Erhitzen bis zum Siedepunkt des Wassers die restlichen Drogen hinzuzufügen, um eine optimale Wirkstoffkonzentration zu erzielen. Es ist aber zur Vereinfachung der Herstellung auch möglich, alle verwendeten Heilkrautbestandteile gemeinsam dem heißen Wasser zuzusetzen.
Da nicht nur dem Fachmann, sondern sogar breiten Bevölkerungsteilen durch vielfältige und leichtverständliche Allgemeinliteratur bekannt ist, welche Pflanzenteile des Heilkrautes jeweils zur Herstellung des Auszuges verwendet werden, wurden solche Angaben zur Erreichung einer besseren Übersicht nur dann in die Tabelle aufgenommen, wenn grundsätzlich die Verwendung mehrerer Pflanzenteile bekannt oder möglich ist. Ansonsten kann es als bekannt vorausgesetzt werden, daß beispielsweise bei der Kamille die Blüten, bei der Zitronenmelisse die Blätter, beim Baldrian die Wurzel und bei der Hagebutte die Frucht bzw. Scheinfrucht verwendet wird. Auch die etherischen Öle können Verwendung finden, was sich beispielsweise bei der Pfefferminze als günstig erwiesen hat, da nur sehr geringe Mengen des Pfefferminzöls zugesetzt werden müssen.

Dem Milchmischgetränk werden gegebenenfalls weitere Zusätze, wie pflanzliche Fette, Vitamine und/oder Mineralstoffmischungen zugesetzt.

### II. Ultrahocherhitztes Milchmischgetränk

**1. Herstellung nach dem Uperisationsverfahren**
   Bei der Herstellung des Milchmischgetränkes auf der Basis von ultrahocherhitzter Milch nach dem Uperisationsverfahren wird der Milch zunächst der erfindungsgemäße Zusatz zugeführt, die Milch homogenisiert und im Prozeßtank auf ca. 80°C vorerwärmt. Dann wird überhitzter Wasserdampf in an sich bekannter Weise unter Druck in die Milch eingeleitet und die Milch so für 2 bis 4 Sekunden auf in etwa 140 bis 160°C erhitzt. Anschließend wird eine Abkühlung im Vakuum durchgeführt, wobei bei einer Temperatur von ca 75 - 80°C ein sogenannter Flash, dem sich eine an sich bekannte Aromarückgewinnung anschließen kann, vorgesehen ist. Je nach Art des gewählten Zusatzes ist es dann nötig, eine aseptische Nachhomogenisierung bei ca 200/50 bar durchzuführen, um ein Absetzen des Zusatzes zu verhindern. Wenn eine Ölphase hinzugegeben wird, wie z.B. bei Verwendung des öligen Auszuges oder des etherischen Öles, kann auch zumindest ein herkömmlicher Emulgator zugesetzt werden.
   Durch die besondere Verfahrensweise und die nur kurze Erhitzung von 2 bis 4 Sekunden gelingt es, den Kochgeschmack der Milch in gewissem Maße zu verringern, so daß dann die erfindungsgemäßen Zusätze in der erfindungsgemäßen Konzentration in der Lage sind, ein Milchmischgetränk zu schaffen, das keinen Kochgeschmack mehr aufweist.
   Nach dem Kühlen auf ca 20 - 25°C wird das Milchmischgetränk abgefüllt.
**2. Herstellung durch das indirekte Ultrahocherhitzungsverfahren**
   Homogenisierte Milch mit dem erfindungsgemäßen Zusatz wird dem Ultrahocherhitzungsverfahren zugeführt. Hier kommt aber im Gegensatz zu dem Uperisationsverfahren der eingesetzte Wasserdampf nicht direkt mit der Milch in Kontakt. Dabei wird weniger hoch, dafür aber etwas länger als bei dem direkten Verfahren erhitzt.
   Bei dieser indirekten Ultrahocherhitzung wird das Produkt zunächst auf ca. 70 - 75°C vorerwärmt und eine Homogenisierung unter erhöhtem Druck durchgeführt. Anschließend wird der eigentlichen Sterilisation noch eine Vorerhitzung auf ca. 120°C vorgeschaltet. Diese Vorerhitzungstemperatur wird in zumindest zwei Schritten erreicht, wobei im ersten Schritt eine Temperatur von ca. 90°C mit einer Verweilzeit von ca. 1-2 Minuten und im zweiten Schritt eine Temperatur von ca 100°C mit einer Verweilzeit von ca 3 - 6 Sekunden eingehalten wird. Dadurch wird eine zumindest teilweise Denaturierung der Milch bewirkt und insbesondere werden -SH-Gruppen freigelegt, die dann weiterreagieren. Sowohl durch einen besonders schonenden Kontakt der Milch mit den erhitzten Platten und Röhren in Verbindung mit der besonderen Prozeßführung bei der Vorerhitzung kann die geschmackliche Qualität der so hergestellten H-Milch in Hinblick auf den Kochgeschmack wesentlich verbessert werden. Die eigentliche Sterilisationstemperatur beträgt dann ca 140°C und wird für ca 2-30 Sekunden eingehalten. Im anschließenden ersten Kühlschritt wird eine Temperatur von ca 60-80°C erreicht.
   Wie auch bei dem direkten Ultrahocherhitzungsverfahren kann dann eine aseptische Nachhomogenisierung je nach Art des gewählten erfindungsgemäßen Zusatzes erfolgen mit anschließender Abkühlung auf die Abfülltemperatur. Zu achten ist auf eine schnellst mögliche Verarbeitung der einmal homogenisierten Milch, was insbesondere in Hinblick auf die Stabilität der Phasen von Bedeutung ist.
   Wichtig ist bei beiden obengenannten Verfahren in Hinblick auf das Erreichen eines lagerungsstabilen Zustandes des fertigen Milchmischgetränkes der Homogenisierungsschritt und, falls erforderlich, die Nachhomogenisierung. Im wesentlichen wird der lagerungsstabile Zustand, d.h. die Verhinderung der Auftrennung des Milchmischgetränkes in verschiedene Phasen dadurch erreicht, daß der Zusatz z.B. in Form des Kräuterextraktes unter Einwirkung physikalischer Scherkräfte in der Milch dispergiert wird. Dabei können zuvor Stabilisierungssalze wie Phosphate und/oder Citrate bzw. Carragene und Pektine zugesetzt werden.
**3. Milchmischgetränk mit Kamille, Salbei, Rosmarin, Pfefferminz**
   Gemäß diesem Ausführungsbeispiel wird ein erfindungsgemäßes Milchmischgetränk unter Verwendung von Extrakten aus Kamille und/oder Salbei, und/oder Rosmarin und/oder Pfefferminze hergestellt. Die Pfefferminze kann dabei als etherisches Öl eingebracht werden. Der Fettgehalt der Milch beträgt 1,5 oder 3,5%. Die Zusammensetzung eines solchen Milchmischgetränkes lautet dann wie folgt:
   6,5 Gew% Dextrose,
   0,1 Gew% Kräuterextrakt in Form der Paste
   93,4 % Milch.
   0,1Gew% der Paste ergeben sich aus einem Pflanzentee-Extrakt auf der Basis von ca. 50 - 60 Gew% Kräutertrockenmasse, wenn Rosmarin, Salbei und/oder Kamille verwendet werden. Bei der Pfefferminze werden 0,04 Gew% der Paste eingesetzt, die sich aus 43-50 Gew% Kräutertrockenmasse ergeben. Wenn die Pfefferminze in Form des etherischen Öls eingesetzt wird, vermindert sich ihr prozentualer Anteil auf 0.01 Gew% unter entsprechener Erhöhung des prozentualen Anteils der Milch in dem Milchmischgetränk.
   Der gesamte Extrakt wird über einen Injektor zusammen mit der Dextrose und gegebenenfalls Stabilisatoren der pasteurisierten Milch zugegeben. Danach erfolgt die Ultrahochtemperaturbehandlung, wobei die Homogenisierungsschritte durchgeführt werden, wie oben bereits angegeben.
**4. Milchmischgetränk mit Gesamtextrakt aus wasserlöslicher und öliger Phase**
   Es wird pasteurisierte Milch mit einem Fettgehalt von 3,5% oder mehr verwendet und die Fettphase dieser Milch mit der öligen Phase des Zusatzes aus dem jeweiligen Heilkraut vorgemischt. Dies wird erreicht durch eine intensive Homogenisierung, z.B. mit einem Ystral-Rührwerk. Parallel wird die wasserlösliche Phase der Milch mit Zucker z.B. in Form von Dextrose und gegebenenfalls Stabilisatoren gemischt und zu der vorgemischten Fettphase mittels eines Injektors hinzugefügt. Anschließend erfolgt die Ultrahochtemperaturbehandlung.
   Diese Vorgehensweise kann aber auch dahingehend abgewandelt werden, daß nur die wasserlösliche Phase dem Prozeßtank zugeführt wird und dann die UHT-Behandlung erfolgt. Erst nach deren Beendigung wird die ölige Phase des Pflanzenextraktes über einen Sterilfilter hinzugegeben. Eine aseptische Homogenisierung wird bei in etwa 200/50 bar durchgeführt und dann auf 20 bis 25°C abgekühlt.

### II. Kefir, Dickmilch, Yoghurt-Zubereitung

Erfindungsgemäße Zubereitungen sind in Tabelle 2 angegeben. Bei der Verwendung der Zubereitung gegen nervliche Erschöpfung ist es besonders günstig, daß ein öliger Auszug aus den Johanniskrautblüten verwendet werden kann, wobei dieser öliger Auszug regelmäßig aus Olivenöl gewonnen wird. Für die Herstellung des öligen Auszuges werden die frischen Blüten zerquetscht und dann im Gewichtsverhältnis 1:20 mit Olivenöl gemischt. Diese Mischung wird dann in der bekannten Weise behandelt, bis der Inhalt eine leuchtend rote Farbe angenommen hat, was in etwa nach 6 Wochen der Fall ist. Dann wird abgepreßt, das Öl von der wäßrigen Schicht abgegossen und in den erfindungsgemäßen Zubereitungen verwendet.

Bei der Verwendung der Zubereitung zum Aufbau wird ein alkoholischer Auszug aus Haferkörnern im Verhältnis 1:10 hergestellt. Da hier schon eine geringe Konzentration des Heilkräuterauszuges im Bereich von 1 bis 3 Vol% in der erfindungsgemäßen Zubereitung ausreicht, ist die Verwendung von verdünntem Weingeist nicht als besonders nachteilig anzusehen. Sie liegt damit nicht höher, als die Alkoholkonzentration der jeweiligen Dosis von auf Weingeistbasis hergestellten Arzneimitteln, die sogar auch Kindern verabreicht werden.

Hinsichtlich der Herstellung der wäßrigen Heilkräuterauszüge und der zu verwendeten Pflanzenteile gilt das zu I. gesagte. Die jeweilige Kefir-, Dickmilch-, oder Yoghurt-Zubereitung kann aus fettarmer Milch oder aus Milch mit natürlichem Fettgehalt und sogar aus Rohmilch hergestellt werden, wobei letzteres weniger üblich, aber durchaus vorteilhaft ist. Um die Konsistenz der jeweiligen Zubereitung nach Zusatz des wäßrigen Heilkräuterauszuges dick zu erhalten, ist die Verwendung eines üblichen Verdickungsmittels, wie sie in der Lebensmittelzusatzstoffverordnung genannt sind, beispielsweise auf Pektinbasis, zweckmäßig. Falls Yoghurt in Form von Trinkyoghurt hergestellt wird, kann dieser auch thermisiert werden. Dann gelten die zu dem Milchmischgetränk gemachten Angaben entsprechend.

### III. Buttermilchmischgetränk

Erfindungsgemäße Buttermilchmischgetränke sind in Tabelle 3 angegeben. Bei dem als Erfrischungsgetränk verwendeten Buttermilchmischgetränk ist insofern eine Besonderheit anzumerken, als die Holunderblüten in diesem Fall durch Kaltextraktion aus einer wäßrigen Zuckerlösung gewonnen werden. Hier darf nicht erhitzt werden, um den zarten aromatischen Geschmack, der sich aus dieser Kaltextraktion ergibt, nicht zu zerstören. Daher muß der wäßrige Auszug aus der Zitronenmelisse separat hergestellt werden.

Bei der Verwendung des Buttermilchmischgetränkes zur Steigerung der Abwehrkräfte können Hagebutten mit Kernen (cum semine) oder ohne Kerne (sine semine) verwendet werden, wobei die die Abwehrkraft steigernde Wirkung durch die Verwendung von Hagebutten der Qualität cum semine stärker ausgeprägt sein kann.

Statt Buttermilch kann auch Sojamilch verwendet werden, auch wenn diese in Tabelle 3 nicht ausdrücklich aufgeführt ist.

In Hinblick auf die in den Tabellen angegebenen gewichtsprozentualen Zuckerangaben können auch geringere als die dort angegebenen Zucker- und/oder Zuckeraustauschstoffkonzentrationen verwendet werden.

**Tabelle 1**

| Milchmischgetränk | | | | | | |
|---|---|---|---|---|---|---|
| Verwendung | pflanzl.Droge(n) | hergestellt aus | Gesamtkonzenration des Heil-Kräuterauszuges Vol% * | Zuckerart | Konzentration des Zuckers Vol% * | Fettgehalt der Milch |
| Erfrischungsgetränk | Zitronenmelisse | wäßriger Auszug heiß | 8 | Traubenzucker oder Zuckeraustauschstoff | 5 | 1,5 |
| Erfrischungsgetränk | Pfefferminz | wäßriger Auszug heiß | 3 | Raffinade-oder Rohrzucker oder Zuckeraustauschstoff | 5 | 1,5 |
| zur Unterstützung bei grippalen Infekten und entzündlichen Prozessen im Bereich der Atemwege | Spitzwegerich Kamille Pfefferminz Salbei | wäßriger Auszug heiß | 10 | Honig oder Malz | 10 | 3,5 oder 1,5 |
| | | kalt | | | | |
| Bei Erkältungskrankheiten | Holunder-und Lindenblüten | wäßriger Auszug heiß | 8-10 | Honig oder Malz | 5-10 | 1,5 oder 3,5 |

| | | | | | | |
|---|---|---|---|---|---|---|
| * die Prozentangaben beziehen sich auf das fertige Milchmischgetränk | | | | | | |

**Tabelle 2**

| Kefir-, Dickmilch-, Yoghurt-Zubereitung | | | | | | |
|---|---|---|---|---|---|---|
| Verwendung | pflanzl.Droge(n) | hergestellt aus | Gesamtkonzentration des Heil-Kräuterauszuges Vol% * | Zuckerart | Konzentration des Zuckers Vol% * | Fettgehalt der Milch |
| Bei nervlicher Erschöpfung | Johanniskrautblüten | öliger Auszug | 4-8 | Traubenzucker oder Zuckeraustauschstoff | 5 | 1,5 |
| Verdauungsbeschwerden, Völlegefühl | Anis Fenchel Pfefferminz | wäßriger Auszug heiß | 10 | Raffinade- oder Rohrzucker oder Ahornsirup | 5 | 1,5 oder 3,5 |
| Zur Erfrischung | Zitronenmelisse | wäßriger Auszug heiß | 10 | Ahornsirup oder Fruchtzucker | 5 | 1,5 |
| Zum Aufbau | Haferkorn | alkoholischer Auszug | 1-3 | Malz oder Traubenzucker | 8-10 | 3,5 |

| | | | | | | |
|---|---|---|---|---|---|---|
| * Die Prozentangaben beziehen sich auf die fertige Zubereitung | | | | | | |

**Tabelle 3**

| Buttermilchmischgetränk | | | | | | |
|---|---|---|---|---|---|---|
| Verwendung | pflanzl.Droge(n) | hergestellt aus | Gesamtkonzentration des Heil-Kräuterauszuges Vol% * | Zuckerart | Konzentration des Zuckers Vol% * | Fettgehalt der Milch |
| Als Erfrischungsgetränk | Holunderblüten Zitronenmelisse | Kaltextraktion in Zucker-Lösung wäßriger Auszug heiß | 2 -8 | Ahornsirup Raffinade-oder Zuckeraustauschstoffe | 5 -8 | 1, 5 |
| Zur Steigerung der Abwehrkräfte und zur Erfrischung schung | Hagebutten Qualität: cum semine oder sine semine | wäßriger Auszug | 4 -6 | Honig | 15 | 1,5 |
| | | kalt | | | | 3,5 |

| | | | | | | |
|---|---|---|---|---|---|---|
| * die Prozentangaben beziehen sich auf das fertige Buttermilchmischgetränk | | | | | | |

## Patentansprüche

1. Lebensmittel auf Milchbasis mit einem Zusatz in Form von einer oder mehreren natürlichen oder künstlichen pflanzlichen Drogen, ausgenommen Vanillin, in Form eines wäßrigen und/oder öligen und/oder alkoholischen Auszuges aus einem oder mehreren beliebigen Heilkräutern und/oder in Form des jeweiligen etherischen Öls, wobei der Zusatz in dem fertigen Lebensmittel in einer Konzentration von 0,01 bis 15 Gew%, vorzugsweise 0.01 - 10 Gew% enthalten ist.

2. Lebensmittel nach Anspruch 1, dadurch gekennzeichnet, daß der Zusatz aus 5 - 15 Gew% des wäßrigen Auszuges in Form eines Extraktes und/oder 0,05 - 0,15 Gew% des wäßrigen Auszuges in Form einer Paste und/oder 4 - 8 Gew% des öligen Auszuges und/oder 1 - 5 Gew% des alkoholischen Auszuges und/oder 0,01 - 0,1 Gew% des etherischen Öls, jeweils bezogen auf das Lebensmittel, besteht.

3. Lebensmittel nach Anspruch 1 oder 2, dadurch gekennzeichnet, daß das fertige Lebensmittel 5 - 15 Gew%, vorzugsweise 4 - 10 Gew% eines oder mehrerer natürlicher Zucker, einschließlich Honig, oder Zuckeraustauschstoffe enthält.

4. Lebensmittel nach einem der Ansprüche 1 bis 3, dadurch gekennzeichnet, daß es ein Milchmischgetränk ist.

5. Lebensmittel nach Anspruch 4, dadurch gekennzeichnet, daß die Milch Kuhmilch ist.

6. Lebensmittel nach Anspruch 4 oder 5, dadurch gekennzeichnet, daß die Milch ultrahocherhitzt ist.

7. Lebensmittel nach Anspruch 4, dadurch gekennzeichnet, daß die Milch Sojamilch ist.

8. Lebensmittel nach einem der Ansprüche 1 bis 7, dadurch gekennzeichnet, daß es ein Molkegetränk ist.

9. Lebensmittel nach einem der Ansprüche 1 bis 3, dadurch gekennzeichnet, daß es auf einem Milchfolgeprodukt basiert.

10. Lebensmittel nach Anspruch 9, dadurch gekennzeichnet, daß das Milchfolgeprodukt Buttermilch, Dickmilch, Kefir oder Yoghurt ist.

11. Verwendung des Lebensmittels nach einem der Ansprüche 1 bis 11 zur Erfrischung und/oder zur Regeneration bei oder nach Belastung.
